# EUROPÄISCHE PATENTANMELDUNG

(11) **EP 2 003 770 A2**
(43) Veröffentlichungstag der Anmeldung: **17.12.2008**
(21) Anmeldenummer: 08010563.8
(22) Anmeldetag: 11.06.2008
(51) Int. Cl.: H02M 7/48, H02M 5/45

(54) **Frequenzumrichter sowie Verfahren zum Betreiben eines Elektromotors mit einem solchen Frequenzumrichter**

(30) Priorität: 13.06.2007 DE 102007027221
(71) Anmelder: Kostal Industrie Elektrik GmbH, 58513 Lüdenscheid (DE)
(72) Erfinder: Bartling, Ralf, 58239 Schwerte (DE)

(57) **Zusammenfassung**

Die Erfindung betrifft einen Frequenzumrichter mit einem netzseitigen statischen Gleichrichter, einem Zwischenkreis und einem aktiv steuerbaren Pulswechselrichter, der dadurch gekennzeichnet ist, dass der Zwischenkreis einen durch eine Drossel und einen Kondensator gebildeten Reihenschwingkreis enthält, dessen Resonanzfrequenz zwischen den höchsten netzseitigen und den niedrigsten wechselrichterseitigen Anregungsfrequenzen liegt, sowie ein Verfahren zum Betreiben eines Elektromotors mit einem solchen Frequenzumrichter.

## Beschreibung

Die Erfindung betrifft einen Frequenzumrichter mit einem netzseitigen statischen Gleichrichter, einem Zwischenkreis und einem aktiv steuerbaren Pulswechselrichter.

Frequenzumrichter der hier angesprochenen Art werden etwa zum Betrieb von Elektromotoren, insbesondere von Asynchronmaschinen eingesetzt.

Weiterhin betrifft die Erfindung deshalb ein Verfahren zum Betreiben eines Elektromotors mit einem solchen Frequenzumrichter.

Aus der DE 202 21 557 U1 ist ein Frequenzumrichter gemäß dem Oberbegriff des Patentanspruchs 1 bekannt. Ausgehend von einer dreiphasigen, netzseitigen Einspeisung weist dieser Frequenzumrichter einen Diodengleichrichter, eine diesem Gleichrichter nachgeordnete Zwischenkreisschaltung sowie dieser wiederum nachgeordnet einen gesteuerten Wechselrichter auf. Die aktiven Schaltelemente des Wechselrichters werden durch eine Steuereinrichtung mit pulsweitenmodulierten Ansteuersignalen beaufschlagt, wodurch der an den Wechselrichter angeschlossene Elektromotor gesteuert wird.

Heutzutage werden nahezu alle Frequenzumrichter als Umrichter mit konstanter Zwischenkreisspannung ausgeführt. Dabei wird die netzseitige Eingangsspannung mit Hilfe eines Gleichrichters in eine Gleichspannung umgewandelt. Diese Spannung wird mit Hilfe von Kondensatoren "geglättet". Da zur Erreichung einer möglichst stabilen Zwischenkreisspannung eine relativ hohe Kapazität bereitgestellt werden muss, werden hierzu nahezu ausschließlich Elektrolytkondensatoren eingesetzt. Diese Elektrolytkondensatoren im Zwischenkreis sorgen auch für eine Entkopplung der hochfrequenten Ströme, die der Wechselrichter im Betrieb zieht, vom Netz da diese aus Gründen der elektromagnetischen Verträglichkeit netzseitig nicht wirksam werden dürfen.

Aufgrund ihrer begrenzten Spannungsfestigkeit müssen Elektrolytkondensatoren beim Einsatz in Frequenzumrichtern mit dreiphasiger Einspeisung häufig in Reihe geschaltet werden. In diesem Fall ist ein schaltungstechnischer Zusatzaufwand erforderlich, um eine gleichmäßige Verteilung der Zwischenkreisspannung auf die Einzelkondensatoren zu gewährleisten. Dies geschieht beispielsweise durch Symmetrierwiderstände oder ähnliches.

Der Einsatz solcher Elektrolytkondensatoren mit großer Kapazität bringt neben dem als nachteilig empfundenen großen Raumbedarf noch eine Reihe weiterer Nachteile mit sich.

So wird etwa die Lebensdauer eines Elektrolytkondensators maßgeblich von seiner Wechselstrombelastung und der Umgebungstemperatur bestimmt. Da in Frequenzumrichtern extrem große Wechselstrombelastungen entstehen, begrenzen die Elektrolytkondensatoren die Lebensdauer des Gesamtgerätes erheblich. Diese Situation wird durch die Umgebungstemperatur noch verschärft. Eine Anhebung um 10°C halbiert in der Regel die Lebensdauer. Daher wird häufig der Versuch unternommen, die Kondensatoren in irgendeiner Weise zu kühlen, sei es durch Einbringen in einen im System vorhandenen Luftstrom oder durch konstruktive Maßnahmen, wie z.B. die thermische Anbindung an einen Kühlkörper. Darüber hinaus weisen Elektrolytkondensatoren noch eine Eigenerwärmung auf, die durch die Wechselstrombelastung in Verbindung mit dem Ersatzreihenwiderstand (ESR) entsteht.

Ein weiterer Nachteil besteht darin, dass die Wechselstrombelastbarkeit eines Elektrolytkondensators begrenzt ist. Die Belastbarkeitsgrenze darf auch kurzzeitig nicht beliebig überschritten werden. Während im normalen Betrieb die Wechselströme lediglich eine Erwärmung des Kondensators verursachen, können bei massiver Überschreitung der spezifizierten Wechselstrombelastbarkeit irreversible Schäden am Kondensator auftreten. Diese Schäden äußern sich durch Ablösen der Oxidationsschicht auf der Anodenfolie bis hin zum Verdampfen des flüssigen Elektrolyten. Durch die Verdampfung kann im Kondensator ein sehr hoher Druck entstehen. Aus diesem Grund besitzt jeder Elektrolytkondensator eine Sollbruchstelle, durch die der Elektrolyt bei Bedarf abgeblasen werden kann. Für kommerzielle Geräte schreibt der Gesetzgeber immer einen "Elektrolytkondensator Explosionstest" vor. Dabei wird der Elektrolytkondensator bewusst zum Abblasen gebracht. Die mechanische Konstruktion des Gesamtgerätes muss sicherstellen, dass Personen, die sich im Umfeld des Gerätes befinden, nicht verletzt werden.

Auf Grund ihres mechanischen Aufbaus sind Elektrolytkondensatoren auch empfindlich gegenüber mechanischen Einwirkungen wie z.B. Vibration oder Stoßbelastungen. Ein Elektrolytkondensator besteht aus einem Wickel mit einer leitenden Folie mit Isolationsschicht, die in einen zylindrischen Becher eingeschoben wird. Schwachstelle sind die Verbindungen zwischen der Folie und den Löt- oder Schraubanschlüssen des Kondensators. Bei Anwendungen, wo der Frequenzumrichter direkt am Motor oder direkt an der Arbeitsmaschine befestigt wird, ist dieser Aspekt zu berücksichtigen.

Bedingt durch die großen Ladeströme, die bei der Glättung der Zwischenkreisspannung entstehen, sinkt der netzseitige Leistungsfaktor extrem ab. Die damit einhergehende Vergrößerung des Effektivwertes des Eingangsstromes ist bei der Auslegung von Zuleitungen und EMV-Filtern zu berücksichtigen.

Der Frequenzumrichter gemäß der vorliegenden Erfindung wird dagegen ohne die großdimensionierten Elektrolytkondensatoren ausgebildet und vermag von daher die genannten Nachteile derselben zu vermeiden.

Dies wird erfindungsgemäß dadurch erreicht, dass der Zwischenkreis einen durch eine Drossel und einen Kondensator gebildeten Reihenschwingkreis enthält, dessen Resonanzfrequenz zwischen den höchsten netzseitigen und den niedrigsten wechselrichterseitigen Anregungsfrequenzen liegt.

Damit der Umrichter mit der extrem kleinen Zwischenkreiskapazität betrieben werden kann, ist für die Steuerung des Motors ein Regelverfahren erforderlich, dass sicher Drehmomente in motorischer als auch in generatorischer Richtung vorgeben kann.

Eine sichere Funktion eines Frequenzumrichters mit LC-Zwischenkreis beim Betrieb eines Elektromotors ist durch das erfindungsgemäße Verfahren gemäß Patentanspruch 5 ermöglicht, indem zur Beeinflussung des Motorstroms ein Regelkreis vorgesehen ist, der als Stellgröße einen Strom ausgibt, und dem als Führungsgröße je nach Betriebzustand eine vorgebbare Drehzahl oder eine vorgebbare Zwischenkreisspannung zugeführt wird.

Weitere vorteilhafte Ausgestaltungen und Weiterbildungen des erfindungsgemäßen Frequenzumrichters sowie des erfindungsgemäßen Verfahrens ergeben sich aus den jeweiligen Unteransprüchen und werden anhand der Zeichnung erläutert.

Es zeigen:
- Figur 1: Ein Prinzipschaltbild eines erfindungsgemäßen Frequenzumrichters
- Figur 2: Ein Bode-Diagramm des erfindungsgemäß abgestimmten Reihenschwingkreises in diesem Ausführungsbeispiel
- Figur 3: ein n/M-Diagramm des Arbeitsbereiches des durch den Frequenzumrichter gesteuerten Antriebes
- Figur 4: eine Darstellung des Regelkreises des erfindungsgemäßen Verfahrens im Drehzahlregelungs-Betrieb
- Figur 5: eine Darstellung des Regelkreises des erfindungsgemäßen Verfahrens im Rückspeiseregelungs-Betrieb
- Figur 6: verschiedene elektrische Größen als Funktion der Zeit beim Übergang vom Antreiben zum Bremsen des Motors
- Figur 7: verschiedene elektrische Größen als Funktion der Zeit bei einem Beschleunigungs- und einem anschließendem Bremsvorgang des Motors

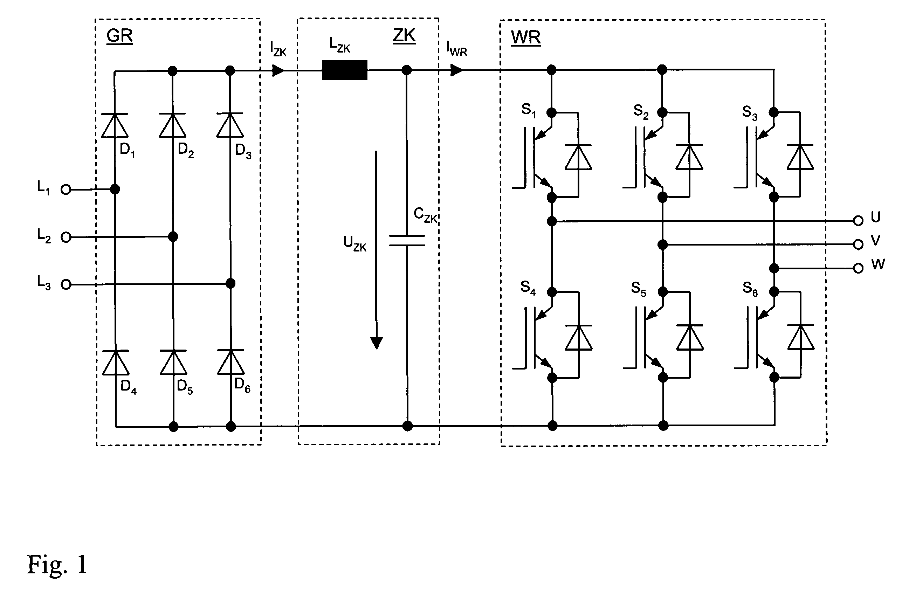

Wie in Fig. 1 zu sehen, weist der erfindungsgemäße Frequenzumrichter eingangsseitig zunächst einen aus sechs Dioden D1, ..., D6 bestehenden statischen Gleichrichter GR auf, der von einer netzseitigen Einspeisung mit einem dreiphasigen Wechselstrom versorgt wird. Am Ausgang dieses Gleichrichters GR ist ein durch eine Drossel L_{ZK} und einen Kondensator C_{ZK} gebildeter Reihenschwingkreis als Zwischenkreisschaltung ZK angeschlossen. Der Zwischenkreisschaltung ZK ausgangsseitig nachgeordnet ist ein aktiv gesteuerter Wechselrichter WR. Als aktive Schaltelemente des Wechselrichters WR sind hierbei IGBTs (S1,...S6) vorgesehen, die durch eine hier nicht dargestellte Steuereinrichtung mit pulsweitenmodulierten Ansteuersignalen beaufschlagt werden, wodurch ein ausgangsseitig an den Wechselrichter WR angeschlossener, hier ebenfalls nicht dargestellter Elektromotor mit einer dreiphasigen Ansteuerung U, V, W gesteuert wird.

Entscheidend für die richtige Funktion des erfindungsgemäßen Frequenzumrichters ist die korrekte Abstimmung des Reihenschwingkreises als Zwischenkreisschaltung ZK. Der Reihenschwingkreis wird von zwei Seiten aus angeregt. Einerseits trägt die vom Gleichrichter GR erzeugte pulsierende Gleichspannung zur Anregung bei. Ein zweiter Anteil stammt vom gepulsten Wechselrichterstrom.

Die Spektren sowohl der welligen Eingangsspannung als auch des Wechselrichterstroms lassen sich mit Hilfe einer FFT berechnen.

Als charakteristische Frequenzen für die Eingangsspannung ergibt sich bei einer Einspeisung aus einem dreiphasigen 50 Hz Netz eine Grundfrequenz von 300 Hz sowie mit abnehmender Amplitude die ganzzahligen Vielfachen als Harmonische hiervon, wobei bereits bei der fünften Harmonischen, also bei 1.8 kHz die Amplitude praktisch auf Null abgefallen ist.

Die kleinste vorkommende Frequenz des Wechselrichterstroms ist die Schaltfrequenz des Umrichters, die im vorliegenden Ausführungsbeispiel bei 16 kHz liegt. Auch hier sind die ganzzahligen Vielfachen als Harmonische dieser Grundfrequenz mit geringeren Amplituden vorhanden.

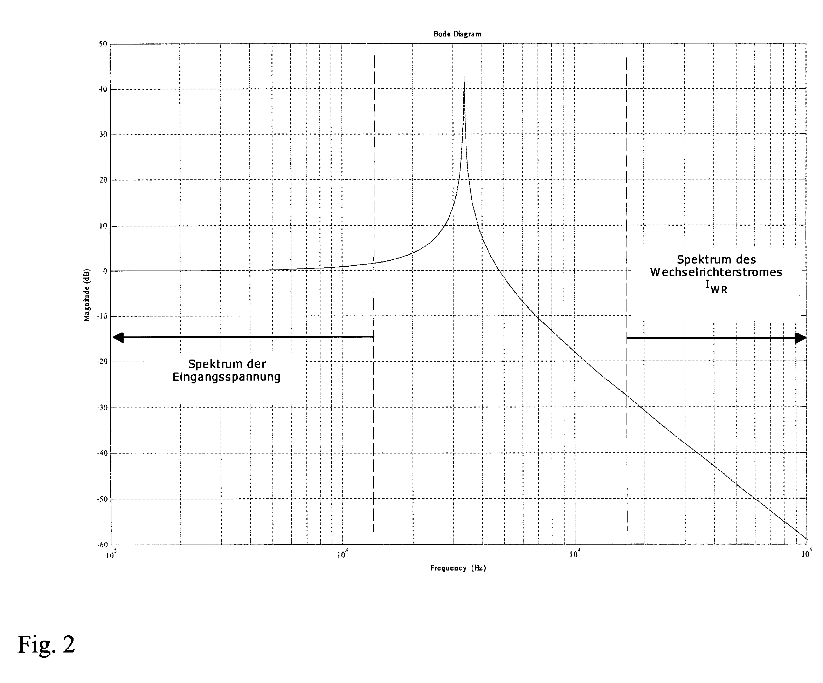

Das in Fig. 2 dargestellte Bode-Diagramm veranschaulicht die relevanten Zusammenhänge bei einem Reihenschwingkreis, der erfindungsgemäß so abgestimmt ist, dass es nicht zu Resonanzerscheinungen kommt.

Die Kurve zeigt, dass der im weiteren auch als LC-Kreis bezeichnete Reihenschwingkreis bei 1.8 kHz das Signal um etwa 3 dB verstärkt. Kleinere Frequenzkomponenten werden ungedämpft durchgelassen, d.h. die Zwischenkreisspannung U_{ZK} wird nahezu den exakt gleichen Verlauf wie die gleichgerichtete Netzspannung aufweisen. Solange keine höherfrequenten Anteile auf den Eingang einwirken, wird der LC-Kreis nicht angeregt.

Auf der hochfrequenten Seite zeigt das Bodediagramm bei der im Beispiel gegebenen Dimensionierung, dass bereits die niedrigste Anregungskomponente bei 16 kHz mit -26.7dB, also auf etwa 4% gedämpft wird, so dass der hochfrequente Wechselrichterstrom nicht netzseitig wirksam wird. Alle höherfrequenten Komponenten werden noch mehr bedämpft.

Der LC-Kreis muss also sowohl auf die eingangsseitige Netzspannung als auch auf die Schaltfrequenz des Umrichters abgestimmt werden. Hier ist ein geeigneter Kompromiss zu finden. Eine maximale Verstärkung der höchsten netzseitigen Anregungsfrequenzen von 5 dB und eine minimale Dämpfung der niedrigsten wechselrichterseitigen Anregungsfrequenzen von -20 dB sollten hierbei nicht über- bzw. unterschritten werden. Noch bessere Resultate ergeben sich bei den im o.g. Beispiel angegebenen Werten von 3 dB für die maximale Verstärkung der höchsten netzseitigen Anregungsfrequenzen und -26,7 dB für die minimale Dämpfung der niedrigsten wechselrichterseitigen Anregungsfrequenzen.

Ein sinnvoller Wert für die Resonanzfrequenz liegt im Rahmen des vorliegenden Ausführungsbeispiels etwa zwischen 2 kHz und 3 kHz.

Für die sichere Funktion eines Frequenzumrichters mit LC-Zwischenkreis beim Betrieb eines Elektromotors ist eine Rückspeiseregelung zwingend erforderlich. Der Betriebsfall der Rückspeisung tritt dann auf, wenn die Drehzahl des Motors reduziert werden soll oder wenn die Lastmaschine antreibend auf den Motor einwirkt. In diesem Fall kommt es dann zu einer Umkehr der Energieflussrichtung im Zwischenkreis ZK, was sich in einem Anstieg in der Zwischenkreisspannung U_{ZK} äußert. Auf Grund der äußerst geringen Kapazität des Zwischenkreiskondensators C_{ZK}, erfolgt dieser Spannungsanstieg auch bei sehr kleinen Bremsmomenten extrem schnell.

Da der erfindungsgemäße Frequenzumrichter über keinerlei schaltungstechnische Einrichtungen zum Abbau dieser Spannung, wie z.B. einen Bremschopper oder eine netzseitige Rückspeiseeinrichtung verfügt, sind regelungstechnische Maßnahmen zur Begrenzung des Anstiegs der Zwischenkreisspannung U_{ZK} erforderlich. Um auch den Betriebsfall des Bremsens sicher zu beherrschen, ist eine Rückspeisereglung erforderlich. Die Bremsmomente, die dabei erreicht werden, entsprechen dabei der Verlustleistung von Frequenzumrichter und Motor. Nur über diese Instanzen kann letztlich Bremsenergie, die vom Motor zurückgeliefert wird, in Wärme umgesetzt werden.

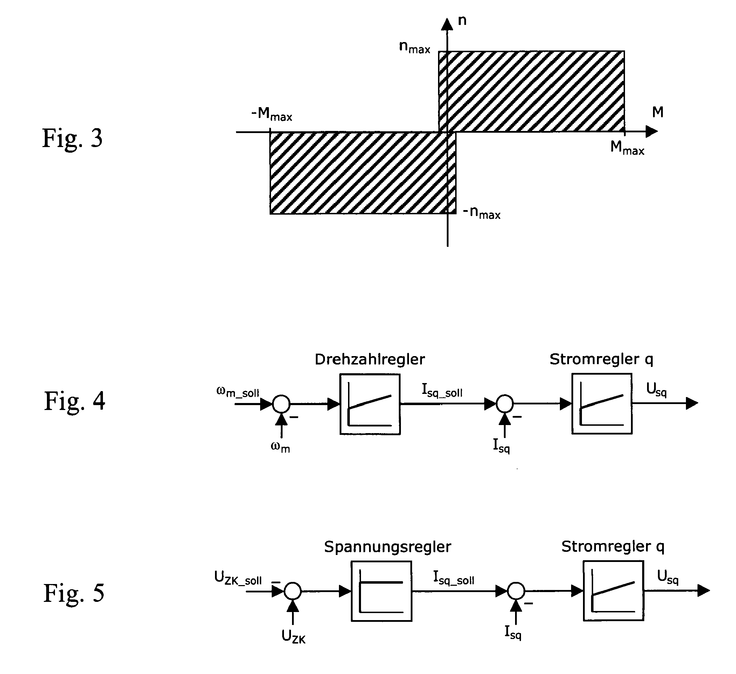

Der Arbeitsbereich des Antriebes lässt sich im n/M-Diagramm wie in Fig. 3 gezeigt darstellen. Grundsätzlich ist der Frequenzumrichter als Zweiquadrantenantrieb konzipiert. Durch die Tatsache, dass durch die Verlustleistung von Umrichter und Motor auch Energie abgebaut werden kann, können auch kleine Bereiche im zweiten und vierten Quadranten mit abgedeckt werden. Genau diese Bereiche werden bei der Rückspeisereglung ausgenutzt. Ziel ist es, mit maximal möglichem Drehmoment zu bremsen, ohne dabei die maximal zulässige Zwischenkreisspannung zu überschreiten. Um dieses Ziel zu erreichen, ist eine Umschaltung in der Drehzahlregelung während des Bremsbetriebs erforderlich. Im normalen Betrieb, d.h. wenn sich der Antrieb im ersten oder dritten Quadranten befindet, ist der Drehzahlregler aktiv.

Figur 4 zeigt die regelungstechnischen Zusammenhänge im normalen Betrieb, d.h. also bei aktivem Drehzahlregler. Stellgröße des Drehzahlreglers ist der Strom I_{sq_soll}, da dieser Strom bei optimaler Feldorientierung direkt proportional zum abgegebenen Drehmoment ist. Soll nun der Antrieb abgebremst werden, z.B. durch einen geänderten Sollwert der Führungsgröße *ω*_{m_soll} des Drehzahlreglers, so wird der Drehzahlregler eine Stellgröße I_{sq_soll} ausgeben, die ein entgegengesetztes Vorzeichen zur Stellgröße Isq_soll bei der aktuellen Drehzahl aufweist. Damit wird der Motor in den generatorischen Betrieb überführt und die Zwischenkreisspannung U_{ZK} wird rasch ansteigen. Sobald eine vorher festgelegte Höhe der Zwischenkreisspannung U_{ZK} überschritten ist, wird die Rückspeiseregelung aktiv.

Dazu wird die Regelstruktur gemäß Figur 5 verändert. An die Stelle des Drehzahlreglers ist nun ein Spannungsregler getreten. Ziel dieses Regelkreises ist es, mit genau soviel Drehmoment zu bremsen, wie es gerade von den Verlusten von Motor und Umrichter aufgefangen werden kann. In diesem Fall würde die Zwischenkreisspannung U_{ZK} konstant bleiben. Der Sollwert U_{ZK_soll} des Regelkreises wird dabei so hoch gewählt, dass der Spitzenwert der Eingangsspannung überschritten wird. Damit wird eine netzseitige Energieeinspeisung in den Zwischenkreis verhindert, d.h. die Dioden D1, ..., D6 des Gleichrichters GR sperren. Stellgröße des Spannungsreglers ist wiederum I_{sq_soll}. Mit diesem Strom kann der Spannungsregler das Bremsmoment exakt einstellen. Sollte beispielsweise die Zwischenkreisspannung U_{ZK} über dem gewünschten Wert liegen, so wird der Umrichter kurzzeitig ein antreibendes Drehmoment abgeben, um diese Spannung im Zwischenkreis wieder abzubauen. Aus diesem Grund besitzt im Spannungsregelkreis der Sollwert U_{ZK_soll} das negative Vorzeichen.

Der Spannungsregelkreis bleibt solange aktiv, bis die Drehzahl auf den gewünschten Wert abgesunken ist. Dann wird wieder zurück auf die normale Drehzahlregelung gemäß Fig. 4 umgeschaltet. In jedem Aufruf des Drehzahlreglers entscheidet die Software, ob die Notwendigkeit einer Umschaltung auf Spannungsregelung gegeben ist.

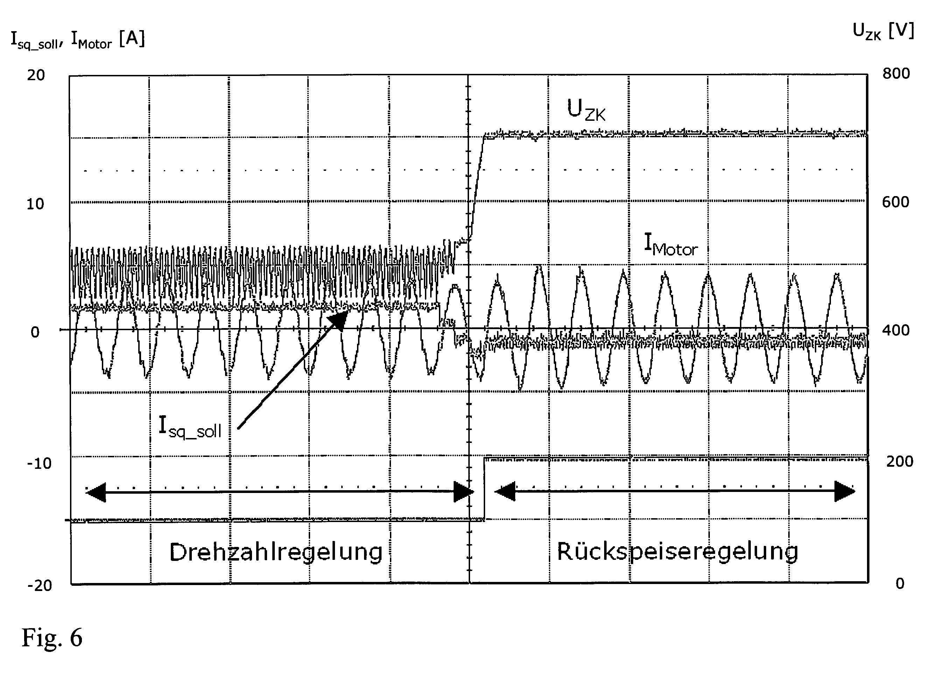

In der Fig. 6 ist der Übergang vom Antreiben zum Bremsen dargestellt. In der linken Hälfte befindet sich der Antrieb noch im Bereich der Drehzahlregelung. Hier ist der drehmomentbildende Strom I_{sq_soll} noch positiv. Die Welligkeit auf der Zwischenkreisspannung U_{ZK} wird durch die gleichgerichtete dreiphasige Netzspannung hervorgerufen. Ab der Mitte wird der Drehzahlregler mit einem kleineren Drehzahlsollwert beaufschlagt. Die Stellgröße I_{sq_soll} des Drehzahlreglers wird daraufhin negativ, um den Motor abzubremsen. Dieser negative Sollwert hat einen schnellen Anstieg in der Zwischenkreisspannung U_{ZK} zur Folge, da der Motor nun in den generatorischen Betrieb überführt wird. Nachdem die Zwischenkreisspannung U_{ZK} einen Wert von 680V überschritten hat, wird die Rückspeiseregelung aktiv. Der Zeitpunkt des Übergangs von Drehzahlregelung zur Rückspeisereglung ist durch die steigende Flanke des unten im Plot abgebildeten Steuersignals dargestellt. Ab hier übernimmt der Spannungsregler die Kontrolle über den drehmomentbildenden Strom I_{sq_soll}. und U_{ZK} wird konstant auf 700V gehalten, bis die Drehzahl des Motors auf die gewünschte Größe abgesunken ist. Eine elementare Voraussetzung für einen sicheren Betrieb der Rückspeiseregelung sind dabei schnelle unterlagerte Stromregelkreise. Da die Kapazität C_{ZK} im Zwischenkreis ZK sehr klein ist, müssen die Stromregelkreise extrem kurze Ausregelzeiten aufweisen. Nur so kann die Zwischenkreisspannung U_{ZK} exakt geregelt werden.

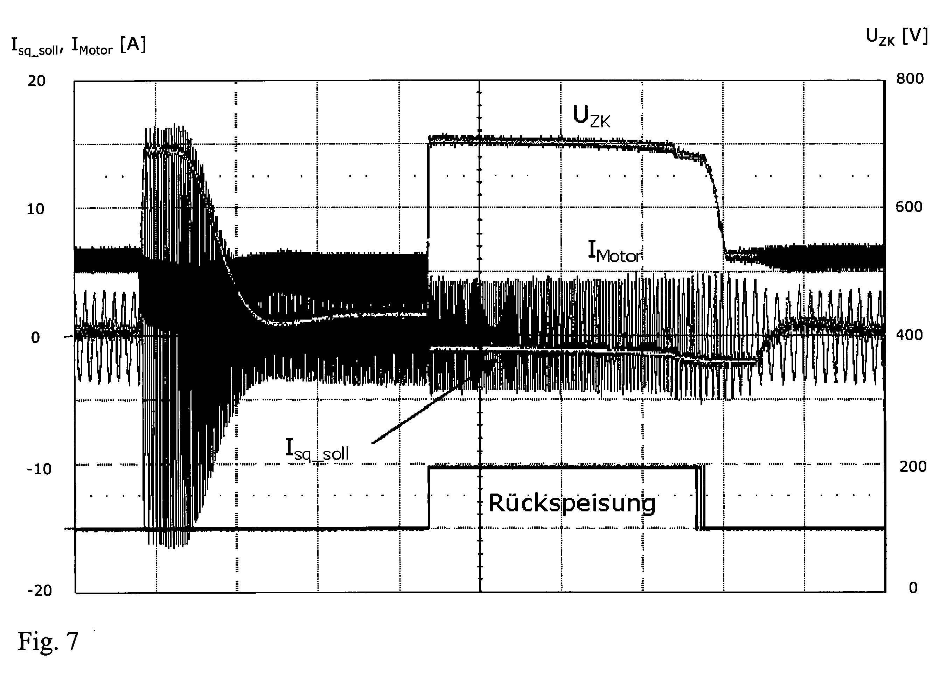

In der Fig. 7 ist der gesamte Ablauf bei einem Beschleunigungs- und einem anschließendem Bremsvorgang des Motors dargestellt: Auf der linken Seite der Abbildung findet zunächst ein Beschleunigungsvorgang von 300 U/min Motordrehzahl auf 1920 U/min statt. Der Antrieb kann hier mit seinem maximal möglichen Drehmoment beschleunigen (I_{sq_soll} = 15A) und erreicht die Zieldrehzahl nach etwa einer Sekunde.

Ab der Mitte erfolgt dann die Abbremsung des Motors von 1920 U/min auf 300 U/min. Dieser Zeitbereich ist durch den Anstieg der Zwischenkreisspannung auf 700 V gekennzeichnet. Der Bremsvorgang selbst nimmt einen Zeitraum von ca. vier Sekunden in Anspruch. Kurz vor Ende des Bremsvorganges nimmt I_{sq_soll} immer größere negative Augenblickswerte an. Der Grund dafür ist, dass hier die Drehzahl des Motors und damit auch sein Spannungsbedarf bereits deutlich abgenommen haben, weil die Motorspannung durch die Drehzahlreduzierung sinkt. Nachdem der Motor seine Zieldrehzahl erreicht hat, wird I_{sq_soll} positiv und die Zwischenkreisspannung U_{ZK} nimmt wieder ihre wellige Form, bedingt durch die dreiphasige Netzeinspeisung, ein.

## Patentansprüche

1. Frequenzumrichter mit einem netzseitigen statischen Gleichrichter (GR), einem Zwischenkreis (ZK) und einem aktiv steuerbaren Pulswechselrichter (WR), **dadurch gekennzeichnet, dass** der Zwischenkreis (ZK) einen durch eine Drossel (L_{ZK}) und einen Kondensator (C_{ZK}) gebildeten Reihenschwingkreis enthält, dessen Resonanzfrequenz zwischen den höchsten netzseitigen und den niedrigsten wechselrichterseitigen Anregungsfrequenzen liegt.

2. Frequenzumrichter nach Anspruch 1, **dadurch gekennzeichnet, dass** der Reihenschwingkreis im Zwischenkreis (ZK) so abgestimmt ist, dass die höchsten netzseitigen Anregungsfrequenzen mit maximal 5 dB verstärkt werden und die niedrigsten wechselrichterseitigen Anregungsfrequenzen mit wenigstens -20 dB gedämpft werden.

3. Frequenzumrichter nach Anspruch 1 oder 2, **dadurch gekennzeichnet, dass** die Resonanzfrequenz des Reihenschwingkreises zwischen 2 kHz und 3 kHz liegt.

4. Frequenzumrichter nach einem der Ansprüche 1 bis 3, **dadurch gekennzeichnet, dass** der statische Gleichrichter (GR) von einer netzseitigen Einspeisung mit einem dreiphasigen Wechselstrom versorgt wird.

5. Verfahren zum Betreiben eines Elektromotors mit einem Frequenzumrichter nach einem der vorhergehenden Ansprüche, **dadurch gekennzeichnet, dass** zur Beeinflussung des Motorstroms ein Regelkreis vorgesehen ist, der als Stellgröße einen Strom (I_{sq_soll}) ausgibt, und dem als Führungsgröße je nach Betriebzustand eine vorgebbare Drehzahl oder eine vorgebbare Zwischenkreisspannung zugeführt wird.

6. Verfahren nach Anspruch 5, **dadurch gekennzeichnet, dass** beim Beschleunigen des Elektromotors und beim Betrieb mit konstanter Drehzahl eine Drehzahlregelung erfolgt, wobei dem Regelkreis als Führungsgröße eine Soll-Drehzahl (*ω*_{m_soll})zugeführt wird, und dass beim Bremsbetrieb des Elektromotors eine Rückspeiseregelung erfolgt, wobei dem Regelkreis als Führungsgröße eine Soll-Zwischenkreisspannung (U_{ZK_soll}) zugeführt wird.

7. Verfahren nach Anspruch 6, **dadurch gekennzeichnet, dass** eine Umschaltung von der Drehzahlregelung zur Rückspeiseregelung erfolgt, wenn die Zwischenkreisspannung U_{ZK} einen vorgegebenen Grenzwert überschreitet, und dass eine Rück-Umschaltung von der Rückspeiseregelung zur Drehzahlregelung erfolgt, wenn die Drehzahl (*ω*ₘ) des Elektromotors die neue Zieldrehzahl (*ω*_{m_soll}) unterschreitet.

8. Verfahren nach Anspruch 6 oder 7, **dadurch gekennzeichnet, dass** die Soll-Zwischenkreisspannung (U_{ZK_soll}) beim Bremsbetrieb des Elektromotors höher als der Spitzenwert der netzseitigen Eingangsspannung ist.
